# EUROPÄISCHE PATENTANMELDUNG

(11) **EP 1 857 730 A2**
(43) Veröffentlichungstag der Anmeldung: **21.11.2007**
(21) Anmeldenummer: 07009678.9
(22) Anmeldetag: 15.05.2007
(51) Int. Cl.: F21S 8/00, G02B 6/00

(54) **Fahrzeugbauteil aus Polycarbonat mit optischer Wirkung**

(30) Priorität: 15.05.2006 DE 102006022923
(71) Anmelder: Webasto AG, 82131 Stockdorf (DE)
(72) Erfinder: Ralf, Schwaighofer, 83115 Neubeurn (DE); Andreas, Lang, 82194 Gröbenzell (DE); Markus, Boß, 93055 Regensburg (DE)

(57) **Zusammenfassung**

Die Erfindung betrifft ein Bauteil eines Fahrzeugs, das aus Polycarbonat hergestellt ist, wobei erfindungsgemäß vorgesehn ist, dass durch Materialgestaltung des lichtleitenden Polycarbonats das Bauteil (1; 10; 20) optische Veränderungen bereitstellt. Insbesondere ist die optische Veränderung durch eine erste Komponente (2) des Bauteils (1) gebildet, die eine von der Innenseite des Bauteils (1) vorstehende Rippe (6) aufweist, und eine zweite Komponente (3) des Bauteils (1) bildet eine innenseitige Abdeckung des Bauteils (1), und über die Rippe (6) wird Licht von der Innenseite zur Außenseite (4) des Bauteils (1) oder von der Außenseite (4) zur Innenseite des Bauteils (1) geleitet.

## Beschreibung

Die Erfindung betrifft ein Bauteil eines Fahrzeugs, das aus Polycarbonat hergestellt ist.

Zur Erzielung einer optischen Wirkung ist aus der DE 103 43 778 A1 bekannt, eine flächige Lichtleiterplatte aus thermoplastischem Kunststoff wie insbesondere aus Polycarbonat (PC) als Lichtdach zur großflächigen Erhellung eines Fahrzeuginnenraumes zu verwenden.

Des weiteren sind optische Einparkhilfen bekannt, die an die Innenseite einer Heckscheibe geklebt werden und einen Streulinseneffekt aufweisen, so dass ein größerer Bereich hinter dem Fahrzeug vom Fahrer einzusehen ist.

Aufgabe der Erfindung ist es, ein eingangs genanntes Bauteil zu schaffen, das hinsichtlich seiner optischen Wirkung verbessert ist.

Diese Aufgabe wird bei dem oben genannten Bauteil erfindungsgemäß dadurch gelöst, dass durch Materialgestaltung des lichtleitenden Polycarbonats das Bauteil optische Veränderungen bereitstellt. Durch die An- oder Umformung des Polycarbonatmaterials beim Spritzgießvorgang können Gestaltungen für unterschiedlichste optische Effekte in einfacher Weise und hoher Qualität an teiltransparenten oder volltransparenten Bauteilen hergestellt werden.

Vorteilhafte Ausgestaltungen der Erfindung sind in den Unteransprüchen angegeben.

Gemäß einer bevorzugten Ausführungsform ist die optische Veränderung durch eine erste Komponente des Bauteils gebildet, die eine von der Innenseite des Bauteils vorstehende rippenartige Erhebung aufweist, während eine zweite Komponente des Bauteils eine innenseitige Abdeckung des Bauteils bildet. Über die rippenartige Erhebung kann Licht von der Innenseite des Bauteils zur Außenseite oder von der Außenseite zur Innenseite des Bauteils geleitet werden, wodurch unterschiedliche lichttechnische Gestaltungen erzielt werden können.

Zweckmäßigerweise ist zumindest eine Lichtquelle an der Innenseite des Bauteils zur Einstrahlung von Licht in die rippenartige Erhebung angeordnet, so dass Licht bedarfsweise und in gewünschter Intensität und auch Farbe erzeugt und eingestrahlt werden kann und an den gewünschten Stellen wieder austreten kann.

Gemäß einer weiteren Ausführungsform kann die optische Veränderung durch eine erste Komponente des Bauteils gebildet sein, die innenseitig Reflexionsprismen aufweist.

Dabei ist es zweckmäßig, wenn zwischen den Bereichen mit Reflexionsprismen eine zweite Komponente, insbesondere aus Polycarbonat, an der Innenseite des Bauteils angebracht ist, die zumindest weniger transparent ist wie die erste Komponente.

Gemäß einer dritten Ausführungsform ist die optische Veränderung durch eine erste Komponente des Bauteils gebildet, die in einer Scheibe des Fahrzeugs als Linseneinrichtung integral gebildet ist.

Bevorzugt ist das Bauteil ein Dachteil eines Falt- oder Klappdaches eines Cabriolets oder ein Dachteil eines festen Fahrzeugdaches oder ein Bestandteil eines solchen Dachteils.

Nachfolgend werden Ausführungsbeispiele des Bauteils unter Bezugnahme auf die Zeichnung näher erläutert. Es zeigt:
- Fig. 1: in einer Schnittansicht ein erstes Ausführungsbeispiel eines Bauteils, bei dem Licht einer Leuchteinrichtung innenseitig eingestrahlt wird;
- Fig. 2: in einer außenseitigen Draufsicht das Bauteil mit der Darstellung des leuchtenden Bereiches an der Außenseite des Bauteils;
- Fig. 3: in einer Schnittansicht ein zweites Ausführungsbeispiel eines Bauteils;
- Fig. 4: in einer außenseitigen Draufsicht das Bauteil der Fig. 3 in einer Anordnung an einem Seitenteil eines hinteren Dachelements eines Klappdaches eines Cabriolets;
- Fig. 5: in einer perspektivischen Draufsicht ein drittes Ausführungsbeispiel eines Bauteils mit einer optischen Einrichtung zur Vergrößerung des Blickfeldes; und
- Fig. 6: in einer Schnittansicht gemäß Linie A - A in Fig. 5 das Bauteil mit der optischen Vergrößerungseinrichtung.

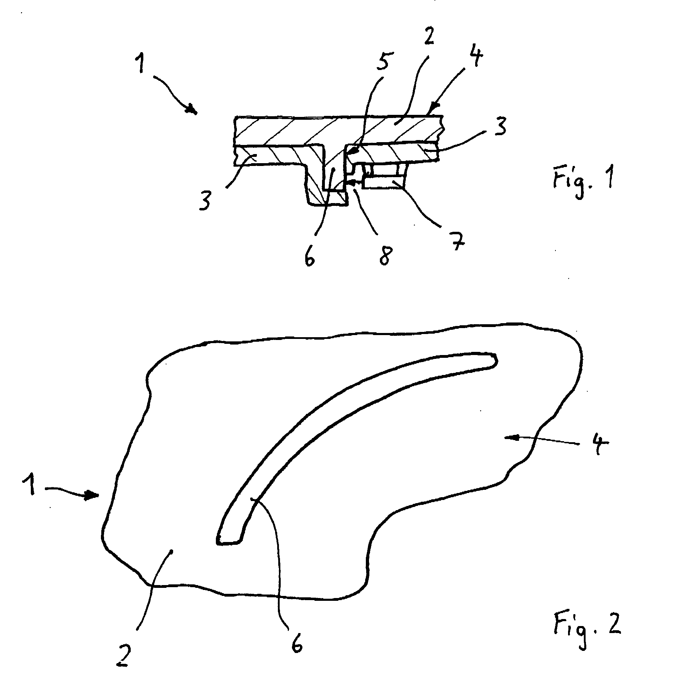

Ein Bauteil 1 eines Fahrzeugs (siehe Fig. 1 und 2) ist in einem Spritzgußwerkzeug aus zwei schichtartigen Komponenten 2 und 3 hergestellt. Die erste Komponente 2, die eine Außenseite 4 des Bauteils 1 bildet, ist aus insbesondere transparentem Polycarbonat hergestellt. Die zweite Komponente 3 ist in dem Spritzgußwerkzeug in einem an sich bekannten 2K-Spitzvorgang an die erste Komponente 2 angespritzt. Die erste Komponente 2 ist mit einer sich einwärts durch eine Aussparung 5 in der zweiten Komponente 3 erstreckenden Rippe 6 gebildet. Die Rippe 6 ist von der zweiten Komponente 3 weitgehend ummantelt, so daß lediglich ein schmaler Bereich der Rippe 6, z. B. ein Stirnbereich oder ein Seitenbereich (wie in Fig. 1 dargestellt), von der zweiten Komponente 3 unbedeckt ist. Zumindest eine Leuchteinrichtung oder Lichtquelle wie z. B. eine Leuchtdiode 7 ist derart an der zweiten Komponente 3 angeordnet, dass sie Licht (siehe Pfeil 8) an der unbedeckten Stelle in die Rippe 6 und damit in die erste Komponente 2 einstrahlen kann. Dieses Licht 7 wird über die Rippe 6 zur Außenfläche oder Außenseite 4 der ersten Komponente 2 bzw. des Bauteils 1 geleitet, die transparent oder nur leicht getönt und damit lichtleitend gebildet ist. Das Licht 7 ist an der Außenseite 4 der ersten Komponente 2 über einen der Rippe 6 entsprechenden länglichen Bereich zu sehen (siehe Fig. 2).

Die Leuchteinrichtung oder Leuchtdiode 7 kann an der zweiten Komponente 3 zur Innenseite optisch verdeckt angeordnet sein. Die Rippe 6 kann innenseitig auch derart von der zweiten Komponente 3 umspritzt sein, daß eine innenseitige Lichtaustrittsfläche verbleibt, so daß auch Licht nach innen gerichtet sein kann bzw. von innen an der Rippe 6 zu sehen ist.

Des weiteren kann auch Licht wie z. B. Umgebungslicht von der Außenseite 4 über die Rippe 6 zur Innenseite geleitet werden und somit einen optischen Lichteffekt erzeugen. Das Bauteil 1 kann ein Dachteil eines festen Daches oder eines Klappdaches eines Cabriolets sein und die Rippe 6 kann zur Innenraumbeleuchtung dienen oder zumindest optische Effekte innenseitig wie auch außenseitig seitlich am Dachteil oder an der Oberseite des Dachteils erzeugen.

Die Rippe 6 kann durchgehend oder mit Unterbrechungen gebildet sein. Die Rippe 6 kann in beliebigen schmalen oder breiten Formen gebildet sein. Demzufolge lassen sich Linien, Kreise, Flächen oder gekreuzte Bahnen sowie beliebige Leuchtpunkte oder Flächen mit einer oder mit mehreren Rippen herstellen.

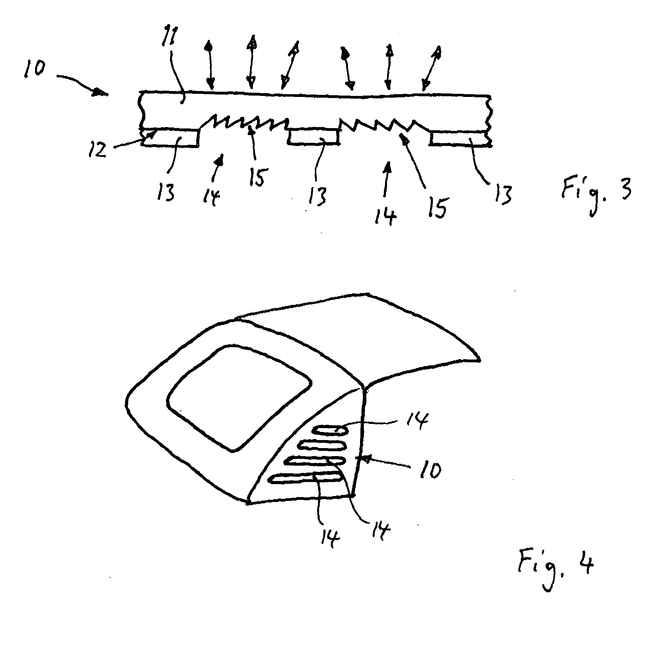

Ein Bauteil 10 (siehe Fig. 3 und 4) enthält gemäß einem zweiten Ausführungsbeispiel eine erste Komponente 11 aus transparentem bzw. lichtleitendem Polycarbonat und eine an die Innenseite 12 in einem 2K-Spritzgießverfahren angespritzte zweite Komponente 13, die bestimmte Bereiche der ersten Komponente 11 innenseitig abdeckt und bestimmte Bereiche 14 unbedeckt läßt, an denen die erste Komponente 11 Reflexionsprismen 15 an ihrer Innenseite 12 aufweist. Diese Bereiche bilden Reflexionsflächen (in Fig. 4 mit Bezugszeichen 14 bezeichnet), an denen von außen einstrahlendes Licht nach aussen hin in der Art von Katzenaugen und/oder nach innen hin reflektiert und verteilt wird und zur Beleuchtung oder der Erzeugung eines optischen Musters dient.

Fig. 4 zeigt als Bauteil 10 ein hinteres Dachteil eines Klappdaches eines Cabriolets, an dessen Seitenwand die Reflexionsflächen 14 angeordnet sind.

Des weiteren kann durch eine insbesondere an der zweiten Komponente 13 innenseitig gelagerte Leuchteinrichtung (nicht dargestellt) die Reflexionsprismen 15 innenseitig angestrahlt werden, so dass über die Lichtleitung in der ersten Komponente 11 an der Außenseite des Bauteils 10 bzw. der ersten Komponente 11 beleuchtete Reflexionsflächen sichtbar sind.

Statt der Ausbildung der Reflexionsprismen 15 an der ersten Komponente 11 können die Reflexionsprismen 15 auch als eigenständiges Bauteil aus lichtleitendem Polycarbonat gebildet sein und an der Innenseite der ersten Komponente 11 flächig angebracht werden, z. B. durch Clipsverbindungen an der ersten Komponente 11, wobei die Clipse an der zweiten Komponente gebildet sein können und an zugeordneten Halterungen der ersten Komponente lösbar festgelegt werden. Das die Reflexionsprismen 15 aufweisende Bauteil kann auch als Zubehörteil zum nachträglichen Anbringen an der Innenseite einer Fahrzeugscheibe vorgesehen sein.

Durch Einfärbung des Polycarbonats oder durch Wahl der Lichtfarbe der Lichtquelle können farbliche Effekte erzielt werden.

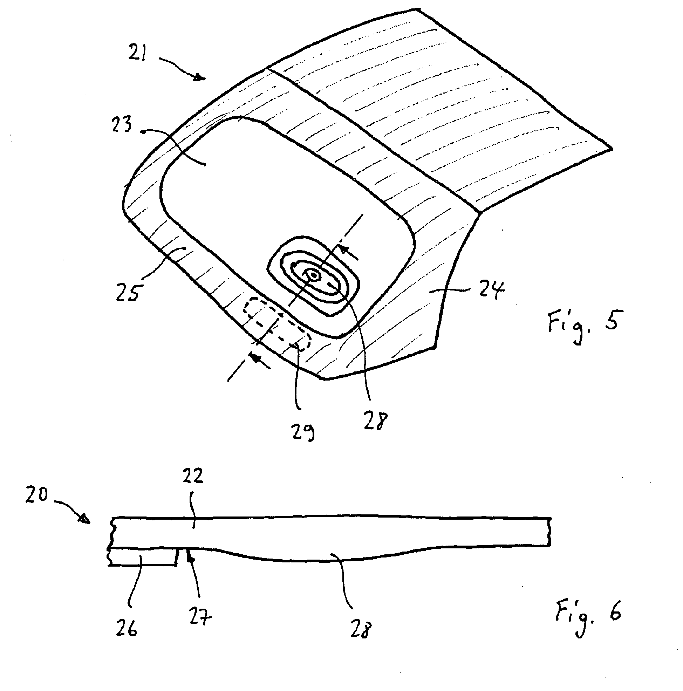

Ein Bauteil 20 (siehe Fig. 5 und 6), z. B. ein hinteres Dachelement 21 eines Klappdaches eines Cabriolets, ist gemäß einem dritten Ausführungsbeispiel von einer ersten Komponente 22 aus Polycarbonat gebildet, wobei neben der Heckscheibe 23 aus transparentem Polycarbonat durch bereichsweises Einfärben oder Folienabdecken andere Bereiche des Dachelements 21 wie Seitenflächen 24 oder rahmenartige Umrandungen 25 der Heckscheibe 23 nicht transparent gebildet sind. Die nicht transparente Abdeckung kann auch durch Anspritzen einer zweiten Komponente 26 in dem verwendeten 2K-Spritzgießverfahren an die Innenseite 27 der ersten Komponente 22 erfolgen.

Durch eine Materialgestaltung oder Materialverdickung der ersten Komponente 22 kann eine Optik 28 oder Linseneinrichtung an der Heckscheibe 23 ausgeformt werden, die den Bereich hinter dem Fahrzeug vergrößert und als an sich bekannte optische Einparkhilfe dienen kann. Die Materialgestaltung oder Materialverdickung kann in der Art einer Streu- oder Fresnell-Linse gebildet sein. Diese Optik oder Linseneinrichtung oder eine weitere Optik 29 oder Linseneinrichtung (in Fig. 5 strichliert dargestellt) kann auch im Bereich der zweiten Komponente 26 gebildet sein, in der dann eine entsprechende Aussparung gebildet ist.

### Bezugszeichenliste

- 1: Bauteil
- 2: erste Komponente
- 3: zweite Komponente
- 4: Außenseite
- 5: Aussparung
- 6: Rippe
- 7: Leuchtdiode
- 8: Licht

- 10: Bauteil
- 11: erste Komponente
- 12: Innenseite
- 13: zweite Komponente

- 14: Bereich
- 15: Reflexionsprismen

- 20: Bauteil
- 21: hinteres Dachelement
- 22: erste Komponente
- 23: Heckscheibe
- 24: Seitenfläche
- 25: Umrandung
- 26: zweite Komponente
- 27: Innenseite
- 28: Optik
- 29: Optik

## Patentansprüche

1. Bauteil eines Fahrzeugs, das aus Polycarbonat hergestellt ist,
**dadurch gekennzeichnet,**
**dass** durch Materialgestaltung des lichtleitenden Polycarbonats das Bauteil (1; 10; 20) optische Veränderungen bereitstellt.

2. Bauteil nach Anspruch 1,
**dadurch gekennzeichnet, dass** die optische Veränderung durch eine erste Komponente (2) des Bauteils (1) gebildet ist, die eine von der Innenseite des Bauteils (1) vorstehende Rippe (6) aufweist, und dass eine zweite Komponente (3) des Bauteils (1) eine innenseitige Abdeckung des Bauteils (1) bildet, und dass über die Rippe (6) Licht von der Innenseite zur Außenseite (4) des Bauteils (1) oder von der Außenseite (4) zur Innenseite des Bauteils (1) geleitet wird.

3. Bauteil nach Anspruch 2,
**dadurch gekennzeichnet, dass** zumindest eine Lichtquelle (7) an der Innenseite des Bauteils (1) zur Einstrahlung von Licht in die Rippe (6) angeordnet ist.

4. Bauteil nach Anspruch 1,
**dadurch gekennzeichnet, dass** die optische Veränderung durch eine erste Komponente (11) des Bauteils (10) gebildet ist, die innenseitig Reflexionsprismen (15) aufweist.

5. Bauteil nach Anspruch 4,
**dadurch gekennzeichnet, dass** zwischen den Bereichen (14) mit Reflexionsprismen (15) eine zweite Komponente (13), insbesondere aus Polycarbonat, an der Innenseite (12) des Bauteils (10) angebracht ist, die zumindest weniger transparent ist wie die erste Komponente (11).

6. Bauteil nach Anspruch 1,
**dadurch gekennzeichnet, dass** die optische Veränderung durch eine erste Komponente (22) des Bauteils (20) gebildet ist, die in einer Scheibe (23) des Fahrzeugs als Linseneinrichtung (28) integral gebildet ist.

7. Bauteil nach Anspruch 6,
**dadurch gekennzeichnet, dass** eine zweite Komponente (26) des Bauteils (20) zumindest einen weniger transparenten Bereich (24, 25) des Bauteils (20) bildet.

8. Bauteil nach einem der Ansprüche 1 bis 7,
**dadurch gekennzeichnet, dass** das Bauteil ein Dachteil eines Falt- oder Klappdaches eines Cabriolets oder ein Dachteil eines festen Fahrzeugdaches ist oder ein Bestandteil eines solchen Dachteils ist.
